# EUROPÄISCHE PATENTSCHRIFT

(11) **EP 0 532 029 B1**
(45) Veröffentlichungstag und Bekanntmachung des Hinweises auf die Patenterteilung: **27.04.1994**
(21) Anmeldenummer: 92115578.4
(22) Anmeldetag: 11.09.1992
(51) Int. Cl.: G03H 1/02

(54) **Purpurmembran-Zubereitungen mit erhöhter holographischer Beugungseffizienz**
Purple membrane composition with increased efficiency of holographic diffraction
Compositions de membrane pourpre avec une efficacité d'effraction holographique augmentée

(30) Priorität: 12.09.1991 DE 4130380
(43) Veröffentlichungstag der Anmeldung: 17.03.1993
(73) Patentinhaber: Consortium für elektrochemische Industrie GmbH, D-81379 München (DE)
(72) Erfinder: Hampp, Norbert, Dr., W-8000 München 40 (DE); Popp, Andreas, W-8000 München 40 (DE); Miller, Alfred, Dr., W-8000 Martinsried (DE); Bräuchle, Christoph, Prof. Dr., W-8000 München 83 (DE); Oesterhelt, Dieter, Prof. Dr., W-8000 München 70 (DE)

(56) Entgegenhaltungen:
- DATABASE WPIL Section Ch, Week 9120, Mai 1991 Derwent Publications Ltd., London, GB; Class E10, AN 144979 ; & JP-A-3081756
- CHEMICAL ABSTRACTS, vol. 104, no. 21, 26. Mai 1986, Columbus, Ohio, US; abstract no. 182020c, RAYFIELD 'EVIDENCE THAT CHARGE MOTION WITHIN BACTERIORHODOPSIN DEPENDS ON SOLVENT VISCOSITY' & PHOTOCHEM PHOTOBIOL Bd. 43, Nr. 2, 1986, Seiten 171-174
- STUDIES IN ORGANIC CHEMISTRY Bd. 40, 1990, AMSTERDAM,NL Seiten 954 - 975 HAMPP ET AL. 'BACTERIORHODOPSIN AND ITS FUNCTIONAL VARIANTS: POTENTIAL APPLICATIONS IN MODERN OPTICS'
- CHEMICAL ABSTRACTS, vol. 112, no. 16, 16. April 1990, Columbus, Ohio, US; abstract no. 148901w, 'OPTICAL PROPERTIES OF POLYMERIC FILMS OF BACTERIORHODOPSIN AND ITS FUNCTIONAL VARIANTS: NEW MATERIALS FOR OPTICAL INFORMATION PROCESSING' & PROC - INT SOC OPT ENG Bd. 1125, 1990, Seiten 2-8

## Beschreibung

Die Erfindung betrifft Purpurmembran-Zubereitungen mit erhöhter holographischer Beugungseffizienz

Die Verwendung von Bacteriorhodopsin oder Bacteriorhodopsin-Varianten als wirksame Komponente in optischen Aufzeichnungsmedien ist bekannt. So werden beispielsweise in dem Artikel von N. Hampp und C. Bräuchle, Bacteriorhodopsin and its Functional variants: Potential Applications in Modern Optics, in Studies in Organic Chemistry 40, Photochromism, 954-975, Ed. H. Dürr, H. Bouas-Laurent, Elsevier, 1990, mögliche Anwendungen von Bacteriorhodopsin tabellarisch aufgeführt.

Aus Gründen der größeren Stabilität gegenüber thermischer, chemischer und photochemischer Zerstörung bzw. Degradation wird in optischen Aufzeichnungsmedien das Bacteriorhodopsin und/oder seine Varianten als wirksame Komponente bevorzugt nicht in Form der freien Moleküle, sondern in membrangebundener Form, also in der Regel in Form der, gegebenenfalls zerkleinerten, Purpurmembran bzw. von Varianten derselben eingesetzt. Varianten der Purpurmembran, d.h. Membranen, die Varianten des Bacteriorhodopsins enthalten, lassen sich in an sich bekannter Weise mit Hilfe von biotechnologischen Verfahren z.B. durch Variation des Retinal-Chromophors mittels chemischen Austausches (vgl. z.B. W. Gärtner, D. Oesterhelt, 1988, Methoxyretinals in bacteriorhodopsin. Absorption maxima, cis-trans-isomerization and retinal protein interaction, Eur. J. Biochem. 176:641-648) oder durch Modifikation des Bacterio-opsin-Moleküls (siehe Z. B. D. Oesterhelt, G. Krippahl, Ann. Microbiol. (Inst. Pasteur) 134B (1983), (137-150)) erhalten. Die Charakterisierung von Bacteriorhodopsin-Varianten mit modifiziertem Bacterio-opsin wird beispielsweise in A. Miller, D. Oesterhelt, Kinetic optimization of bacteriorhodopsin by aspartic acid 96 as an internal proton donor, Biochim. and Biophys. Acta 1020, (1990), 57-64 beschrieben.

Eine vielversprechende Anwendung von Purpurmembranen liegt in der Holographie. Unter Holographie sind dabei neben den rein holographischen Verfahren auch solche optischen Verfahren zu verstehen, die einen oder mehrere holographische Teilschritte beinhalten.

Die Vorteile der Verwendung von Purpurmembran-Zubereitungen für die genannten Zwecke liegen insbesondere im günstigen Absorptionsbereich, in der hohen erzielbaren Auflösung, in der hohen Zahl der möglichen Schreib-/Löschzyklen, in der hohen Lagerstabilität, in der hohen Sensitivität und Lichtechtheit. Auch ein Einsatz bei der Farbholographie ist möglich. Dies gilt für sämtliche mit Purpurmembran-Zubereitungen möglichen Hologrammtypen, wie etwa die oft als B-Typ-Hologramme bezeichneten Ausführungsformen, bei denen eine Photokonversion des Anfangszustandes (=B) der wirksamen Komponente vorgenommen wird, oder diejenigen Hologrammtypen, bei denen ein Zwischenzustand oder Photointermediat einer Photokonversion unterworfen wird (z. B. M-Typ Hologramm). Vorteilhaft wird dafür ein Intermediat ausgewählt, dessen Absorptionseigenschaften sich deutlich von denen des Anfangszustandes unterscheiden. Ein solches Intermediat, welches sich günstig für holographische Zwecke einsetzen läßt, steht beispielsweise in Form des häufig als M-Zustand bezeichneten Zwischenzustandes des natürlich vorkommenden Bacteriorhodopsins zur Verfügung.

Für die Holographie können Purpurmembranen beispielsweise in Form von Suspensionen oder Filmen verwendet werden.

Purpurmembran-Suspensionen enthalten Purpurmembranen in Wasser, d. h. der Wassergehalt ist in Purpurmembran-Suspensionen größer als der Gehalt an Purpurmembran. Ein Einsatz von Purpurmembran-Suspensionen als Aufzeichnungsmaterial kommt für Informationen in Betracht, bei denen nur eine geringe räumliche Auflösung des Aufzeichnungsmaterials benötigt wird und/oder lange Anstiegszeiten der holographischen Beugungseffizienz ausreichend sind.

Unter holographischer Beugungseffizienz, versteht man das Verhältnis der Intensität von am holographischen Gitter abgebeugtem Licht zur Intensität des in das holographische Gitter eingestrahlten Lichtes. Die holographische Beugungseffizienz wird in der Regel in % angegeben. Der Maximalwert der zu erreichenden Beugungseffizienz liegt bei 100 %. Die für die erfindungsgemäßen Purpurmembran-Zubereitungen angegebenen holographischen Beugungseffizienzen beziehen sich, wie auch bei den Angaben im Stand der Technik üblich auf eine Wellenlänge von 632,8 nm. Der Anstieg der holographischen Beugungseffizienz ist die Zeitspanne von Belichtungsbeginn bis zum Erreichen der maximalen Beugungseffizienz. Je kürzer diese Zeitspanne ist, desto mehr eignet sich das Material für dynamische Anwendungen. Das Minimum der theoretisch erreichbaren Anstiegszeit der holographischen Beugungseffizienz beträgt ca. 50 µs für Purpurmembran-Zubereitung. Die Definition der holographischen Beugungseffizienz und eine Beschreibung des Zusammenhangs zwischen Beugungseffizienz und Wellenlänge findet sich bei Kogelnik, H. (1969) Bell Syst. Tech. J. 48, 2909-2947.

Ein Einsatz von Suspensionen enthaltend Purpurmembranen als Aufzeichnungsmaterial wird von V. Y. Bazhenov et al in Optical Processing and Computing in Kapitel 4, Biopolymers for Real-Time Optical Processing 103-144 beschrieben. Zwar sind aus dieser Schrift Bacteriorhodopsin-Suspensionen mit einer Beugungseffizienz bis zu 6 % bekannt, aber Aussagen über die Herstellung und Zusammensetzung dieser Suspensionen werden nicht gemacht. Diese Suspensionen haben diffusionslimitierte Anstiegszeiten der Beugungseffizienz, was zu Anstiegszeiten der Beugungseffizienz von 7 sec und länger führt. Diese Anstiegszeiten der Beugungseffizienz sind für eine Verwendung in der dynamischen Holographie zu langsam. Mit Purpurmembran Suspensionen werden Auflösungen von 0 bis 500 Linien/mm erreicht. Die Suspensionen sind daher für eine Verwendung in der dynamischen Holographie oder für die Verwendung als hochauflösendes Speichermaterial, wo höhere Auflösungen bis 5000 Linien/mm erforderlich sind, ungeeignet. Auch die Realisierung von M-Typ Hologrammen ist mit diesen Suspensionen nicht möglich.

Diesen Nachteil zeigen Medien, die immobilisierte Purpurmembran enthalten, nicht. Dabei wird die Purpurmembran bevorzugt in Form von Filmen oder Gelen, eingebettet in Trägermaterialien wie z.B. Polymere, aufgebracht auf Substrate wie etwa Glasplatten oder Spiegel oder in anderer, eine reproduzierbare flächenhafte Anordnung gestattender Form eingesetzt.

Nach Hampp et al. in "Thin films in optics" (Ed.:T.Tschudi) Proc. SPIE 1125, S.2-8 werden Purpurmembran enthaltende Filme dadurch erhalten, daß man Purpurmembran-Suspensionen auf siliconisierten Glasplatten trocknet. Die optische Homogenität der Filme kann erhöht werden indem man Mischungen aus wasserlöslichen Polymeren mit Purpurmembran-Suspensionen einsetzt. Als Beispiele für wasserlösliche Polymere werden Polyvinylalkohol und Polyvinylpyrollidon genannt. Als weitere Methode wird das Einbetten in eine Matrix durch direkte Polymerisation in Polyacrylamid Gele genannt. Einzelheiten über die Herstellung der purpurmembranhaltigen Filme werden nicht gemacht. Die Filme haben einen Wassergehalt von 60 %. Die Beugungseffizienz liegt bei maximal 0,2 % für Filme enthaltend Wildtyp-Purpurmembran (BR-WT) bzw. bei 0,3 % für Filme enthaltend eine Purpurmembran-Mutante, bei der an Position 96 des Bacteriorhodopsins Asparaginsäure gegen Asparagin ausgetauscht ist (BR 326 Mutante).

In dem Artikel von N. Hampp und C. Bräuchle, "Bacteriorhodopsin and its Functional variants: Potential Applications in Modern Optics" in Studies in Organic Chemistry 40, Photochromism, S. 954-957 Ed. H. Dürr, H. Bouas-Laurent, Elsevier, 1990, wird die Anwendung von Wildtyp-Bacteriorhodopsin und der schon genannten Position 96 Variante des Bacteriorhodopsins BR 326 auf dem Gebiet der modernen Optik bzw. Holographie beschrieben. Als Herstellungsverfahren für Filme enthaltend Bacteriorhodopsin wird offenbart, die Purpurmembran Suspension auf einem Glasträger oder eingebettet in Polymere zu trocknen. Nach dieser Schrift wird die Purpurmembran wie gekauft oder präpariert für die Filmherstellung eingesetzt. Es werden keine Angaben über Parameter wie Salzkonzentrationen oder Pufferlösungen oder etwaige Hilfsstoffe gemacht. Die dort beschriebenen Filme haben eine Beugungseffizienz von 1 % bei Verwendung von WT Purpurmembran bzw. von 2 % bei Verwendung der BR-326 Mutante. In Biophys. J. 58, (1990), S 83-93 werden verschiedene Eigenschaften von Filmen enthaltend Wildtyp-Bacteriorhodopsin bzw. die Position 96 Variante des Bacteriorhodopsins BR 326 für Filme offenbart. Die purpurmembranhaltigen Filme wurden dadurch erhalten, daß eine wässrige Purpurmembran-Suspension mit einem pH von 6 bis 7 auf silanisierten Glasplatten über Nacht luftgetrocknet wurde. Die Filme haben einen Wassergehalt von 60 %. Nach dieser Schrift wird die Purpurmembran auf einen pH von 6 bis 7 eingestellt für die Filmherstellung eingesetzt. Es werden keine Angaben über Parameter wie Salzkonzentrationen oder Pufferlösungen oder etwaige Hilfsstoffe gemacht. Die erhaltenen Filme haben eine Beugungseffizienz von 0,2 bis 0,4 %.

Ein schwerwiegender Nachteil, der bisher einer breiteren Anwendung von Purpurmembran-Zubereitungen in der Holographie entgegenstand, ist die geringe erreichbare holographische Beugungseffizienz der bekannten Purpurmembran-Zubereitungen. Diese geringe Beugungseffizienz macht es beispielsweise erforderlich zur Detektion der gespeicherten holographischen Information starke Laser einzusetzen, um im Detektionssystem ein Signal, welches eindeutig zu registrieren ist, d. h. ein gutes Signal/Rausch-Verhältnis ermöglicht, zu erhalten. Starke Laser haben in der Praxis Nachteile. Beispielsweise seien folgende genannt: Hohe Laserleistung ist teuer, starke Laser sind baulich groß und der Betrieb starker Laser erfordert höhere Sicherheitsstandards. Zudem führt eine starke Laserleistung zu einer thermischen Belastung der Probe durch das nicht abgebeugte, die Probe transmittierende Licht, welche unter Umständen zur Zerstörung der gespeicherten Information führen kann.

Trotz ihrer teilweise hohen Beugungseffizienz sind bekannte Purpurmembran-Suspensionen, wie ausgeführt, aufgrund Ihrer langsamen Anstiegszeit der Beugungseffizienz sowie ihrer geringen räumlichen Auflösung ebenfalls für breite Anwendungen ungeeignet.

Aufgabe der Erfindung war es daher, Purpurmembran-Zubereitungen mit einer erhöhten Beugungseffizienz zur Verfügung zu stellen, die eine schnellere Anstiegszeit der holographischen Beugungseffizienz haben, als bekannte Purpurmembran-Suspensionen.

Die Aufgabe wird durch Purpurmembran-Zubereitungen gelöst, die eine Beugungseffizienz von mehr als 2 % und eine Anstiegszeit der holographischen Beugungseffizienz von weniger als 5 sec. haben.

Die erfindungsgemäßen Purpurmembran-Zubereitungen haben einen pH Wert zwischen 6 und 11 und enthalten eine Purpurmembran mit einer Photozykluszeit von mindestens 10 ms sowie 1 bis 10 Gew.% eines Protonendonators/-akzeptors und 1 - 30 % Wasser.

Die bevorzugten Purpurmembran-Zubereitungen haben eine Beugungseffizienz von 4 % und mehr bei einer Anstiegszeit der Beugungseffizienz von weniger als 1,5 sec., die besonders bevorzugten Purpurmembran-Zubereitungen haben eine holographische Beugungeffizienz von 7 % und mehr bei einer Anstiegszeit der Beugungseffizienz von weniger als 0,6 sec.

Die erreichte räumliche Auflösung ist bei allen Zubereitungen größer als 1500 Linien/mm.

Als Ausgangsprodukte für die Herstellung der erfindungsgemäßen Purpurmembran-Zubereitungen sind Purpurmembranen geeignet, sofern sie eine Photozykluszeit von mindestens 10 ms gemessen bei 20°C in einer 10 mmolaren Na/K Phosphatpufferlösung (pH 7) haben.

Bevorzugt geeignet als Ausgangsprodukte zur Herstellung der erfindungsgemäßen Purpurmembran-Zubereitungen sind Purpurmembranen mit einer Photozykluszeit von größer 50 ms, besonders bevorzugt geeignet sind Purpurmembranen mit einer Photozykluszeit von größer 100 ms.

Die Photozykluszeit von Purpurmembran-Suspensionen läßt sich beispielsweise durch Blitzphotolyse-Experimente bestimmen. Dieses Verfahren ist dem Fachmann bekannt. In Blitzphotolyse-Experimenten wird durch einen kurzen intensiven Lichtblitz ein Anteil der Purpurmembran photochemisch angeregt. Ein schwacher Detektionsstrahl einer Wellenlänge, die dem Absorbtionsmaximum des Anfangszustands entspricht, ist geeignet, die photochemische Wegreaktion wie auch die thermische Rückkehr in den Anfangszustand (B-Zustand) zu beobachten. Die Photozykluszeit ist die Zeitspanne, nach der (1-1/e) (≈ 63 %) des angeregten Materials durch thermische Relaxation vom angeregten Zustand (z. B. M-Zustand) in den Ausgangszustand (z. B. B-Zustand) zurückgekehrt ist. Die maximal mögliche Photozykluszeit geht gegen unendlich. In diesem Fall sind angeregter Zustand bzw. Ausgangszustand durch Belichtung jeweils stabil zu etablieren und es findet keine thermische Relaxation statt.

Die Gewinnung der Purpurmembran z. B. aus Halobacterium halobium ist beispielsweise in D. Oesterhelt, W. Stoeckenius, Isolation of the Cell Membrane of Halobacterium halobium and its fractionation in Red and Purple membrane; Methods in Enzymology, Vol. 31, Biomembrane 667-678 (1974) oder in EP-A-406850 beschrieben. Nach den beschriebenen Verfahren lassen sich auch Varianten der Purpurmembran aus Halobacterium halobium oder aus anderen Halobacterien Stämmen gewinnen. Daneben sind als Ausgangssubstanzen geeignete Purpurmembranen beispielsweise bei Wacker-Chemie GmbH käuflich erhältlich.

Beispiele für bevorzugt geeignete Ausgangsprodukte sind Membranen enthaltend die Mutante BR 326 oder Membranen enthaltend Bacteriorhodopsin-Varianten, bei denen sich unter Lichteinwirkung ausschließlich ein Intermediat wie z. B. der M-Zustand maßgeblich populiert. Bei solchen bevorzugt geeigneten Membranen ist die Lebensdauer eines der Intermediate deutlich länger als die Lebensdauer aller anderen Intermediate des Photozyklus. Weiter sind solche Membranen als Ausgangssubstanzen zur Herstellung der erfindungsgemäßen Purpurmembran-Zubereitungen besonders gut geeignet, bei denen die Reprotonierung der Schiff'schen Base während des Photozyklus gestört ist. Es handelt sich hierbei um Purpurmembranen enthaltend ein Bacteriorhodopsin, bei dem entweder die Aminosäure Asp an Position 96 gegen eine andere natürliche Aminosäure ausgetauscht ist, oder bei der die Lage der Asparaginsäure an Position 96 in ihrer Lage zur Schiff'schen Base beispielsweise durch Deletion oder Insertion einer Aminosäure verändert ist.

Die geeigneten Purpurmembranen werden bevorzugt auf eine OD₅₇₀ von 0,2 bis 6, besonders bevorzugt auf eine OD₅₇₀ größer 4 bis 6, und auf einen pH Wert zwischen 6 und 11, bevorzugt zwischen 6,5 und 9, mittels eines Puffers eingestellt. Als Puffer läßt sich beispielsweise 10 mM Na/K Phosphat verwenden.

1 bis 10 Gew.-% bezogen auf das Trockengewicht an Purpurmembran eines Protonendonators/-akzeptors werden zugegeben. Der Protonendonator/-akzeptor besteht beispielsweise aus einer oder mehreren Substanzen ausgewählt aus der Gruppe Glycerin, Guanidin, Arginin, Harnstoff, Diethylamin, Natriumazid, Glykole, Mono-, Di-, Polysaccharide, mono- oder polyfunktionelle Alkohole. Bevorzugt werden als Protonendonator/akzeptor Glycerin, Arginin und/oder Diethylamin verwendet.

Besonders bevorzugt wird Glycerin verwendet. Dieser Suspension wird das Wasser bis auf einen Restgehalt von 1 bis 30 %, bevorzugt von 5 bis 20 % entzogen. Der Wasserentzug kann beispielsweise durch Trocknen oder durch Zentrifugation erfolgen.

Die so erhaltene Purpurmembran-Zubereitung hat überraschenderweise eine holographische Beugungseffizienz von mehr als 2 % und eine Anstiegszeit der Beugungseffizienz von weniger als 5 sec. sowie eine räumliche Auflösung von mehr als 1500 Linien/mm.

Je nach gewünschtem Verwendungszweck der erfindungsgemäßen Purpurmembran-Zubereitungen läßt sich das Verfahren zur Herstellung derart modifizieren, daß die Purpurmembran-Zubereitung vor, während oder nach erfindungsgemäßer Herstellung jeweils entsprechend dem gewünschten Anwendungszweck, wie aus dem jeweiligen Stand der Technik bekannt, verarbeitet wird. Die erhöhte Beugungseffizienz von mehr als 2 % sowie die Anstiegszeit der Beugungseffizienz von weniger als 5 sec. bzw. die Werte der bevorzugten oder besonders bevorzugten Ausführungsformen und die resultierenden verbesserten Anwendungseigenschaften zeigen auch die entsprechend verarbeiteten Purpurmembran-Zubereitungen.

Die erfindungsgemäßen Purpurmembran-Zubereitungen lassen sich für alle im Stand der Technik bekannten Verwendungen einsetzen. Beispiele für besonders geeignete Anwendungen sind die Herstellung von purpurmembranhaltigen Filmen, die Verwendung für die transiente holographische Speicherung, die holographische Interferometrie, die holographische Mustererkennung, die optische Phasenkonjugation, optische neuronale Netzwerke, assoziative Speicher und die nichtlineare optische Filterung.

Soll die Purpurmembran-Zubereitung beispielsweise zur Herstellung von purpurmembranhaltigen Filmen verwendet werden, so wird sie unter Schwerkrafteinwirkung auf die Oberfläche eines Substrates kontrollierter optischer Güte aufgebracht und mit einem zweiten Substrat versiegelt. Für die Herstellung von Filmen enthaltend immobilisierte Pupurmembran ebenfalls geeignet ist die sogenannte "spin-coating" Technik.

Es zeigte sich, das derart hergestellte Filme eine Beugungseffizienz von mehr als 2 % sowie eine Anstiegszeit der Beugungseffizienz von kleiner 5 sec. aufwiesen. Bei Verwendung der bevorzugten Purpurmembran-Zubereitungen werden die dort genannten Werte erreicht.

Die Beugungseffizienz der erfindungsgemäßen Purpurmembran-Zubereitungen wird mit zunehmendem pH Wert größer. Die Beugungseffizienz der Purpurmembran-Zubereitung wird mit zunehmender Photozykluszelt der als Ausgangssubstanz verwendeten Purpurmembran größer.

So ermöglicht beispielsweise die Verwendung der Purpurmembran Variante BR 326 zur Herstellung der erfindungsgemäßen Purpurmembran-Zubereitung schon bei niedrigeren proteinschonenden pH Werten deutlich erhöhte Beugungseffizienzen.

Nachstehend wird die Erfindung anhand von Beispielen und Vergleichsbeispielen näher erläutert.

### Beispiel 1

0.6 ml einer kommerziellen Purpurmembran-Suspension (Hersteller Wacker-Chemie GmbH, München), des Typs BR 326 mit einer optischen Dichte von 30 bei 570 nm und einer Photozykluszeit von 2400 ms bei 20°C und pH 7 in Na/K Phosphatpuffer 10 mMol/l werden mit 9.4 ml eines Na/K Phosphatpuffers pH 8 (100 mMol/l), der 20 mMol/l Natriumchlorid und 6% (Vol./Vol.) Glyzerin (87%ig) enthält, auf einen pH Wert von 8,0 eingestellt. Der pH wird mittels einer Glaselektrode kontrolliert. Die OD₅₇₀ der Suspension beträgt 5,2. Anschließend wird die Suspension in eine Zentrifugierhalterung gefüllt, die am Boden eine plangeschliffene runde Glasscheibe mit einem Durchmesser von 22.4 mm auf einem dem Zentrifugeneinsatz angepaßten Tefloneinsatz und einem Zylinder mit einer inneren Bohrung von 16.2 mm enthält. In einer Ultra-Zentrifuge wird 45 min bei 23000 Upm in einem Rotor des Typs TST 28.2 zentrifugiert. Der klare Überstand wird anschliessend abgegossen und die runde Glasscheibe, die nun in der Mitte einen Purpurmembranfilm mit dem Durchmesser der Zylinderbohrung trägt, aus dem Zentrifugeneinsatz entnommen. Nach 24-stündigem Trocknen bei 20°C und 30 % rel. Luftfeuchtigkeit werden zwei dieser Filme gegeneinander gelegt und aufeinander gepreßt. Als Abstandshalter wird ein Ring aus Edelstahl mit einer Dicke von 25 µm verwendet. Während des Preßvorgangs wird der Film 10 min auf 60°C erhitzt und danach innerhalb einer Stunde abgekühlt. Der so erhaltene Film hat einen Wassergehalt von 5 Gew.-% (Gewichtsverlust beim Trocknen bei 20°C über Calciumchlorid).

Bei einer Schreibintensität von 20 mW/cm² und einer Schreibwellenlänge von 568 nm und einem Winkel zwischen den Schreibstrahlen von 45° sowie einer Lesewellenlänge von 632,8 nm hat der Film eine Hologrammeffizienz von 7%. Die Anstiegszeit der holographischen Beugungseffizienz betrug 500 ms. Die holographische Auflösung betrug wesentlich mehr als 2500 Linien/mm.

### Beispiel 2

0.6 ml einer kommerziellen Purpurmembran-Suspension (Hersteller Wacker-Chemie GmbH, München), des Typs BR 326 mit einer optischen Dichte von 30 bei 570 nm und einer Photozykluszeit von 2500 ms bei 20°C und pH 7 in Na/K Phosphatpuffer 10 mMol/l werden mit 9.4 ml eines Na/K Phosphatpuffers pH 6,5 (100 mMol/l), der 20 mMol/l Natriumchlorid und 6% (Vol./Vol.) Glyzerin (87%ig) enthält, versetzt. Der pH wird mittels einer Glaselektrode kontrolliert, er beträgt 6,5. Die OD₅₇₀ der Suspension beträgt 5,0.

Aus der Purpurmembran-Suspension wird wie in Beispiel 1 beschrieben ein Film hergestellt.

Der so erhaltene Film hat einen Wassergehalt von 5 Gew.-%. Er hat eine maximal erreichbare holographische Beugungseffizienz von 4 % bei einer Schreibintensität von 50 mW/cm² und einer Schreibwellenlänge von 568 nm und einem Winkel zwischen den Schreibstrahlen von 45° sowie einer Lesewellenlänge von 632,8 nm. Die Anstiegszeit der holographischen Beugungseffizienz betrug 300 ms. Die holographische Auflösung betrug wesentlich mehr als 2500 Linien/mm.

### Beispiel 3

Es wird wie in Beispiel 1 beschrieben ein Film enthaltend immobilisierte Purpurmembran hergestellt. Statt einer Purpurmembran-Suspension des Typs BR 326 wurde eine Wildtyp Purpurmembran-Suspension eingesetzt. Diese hatte eine Photozykluszeit von 10 ms gemessen wie in Beispiel 1 beschrieben. Die OD₅₇₀ der zur Filmherstellung eingesetzten Suspension beträgt 5,2. Der so erhaltene Film hat einen Wassergehalt von 5 Gew.-%. Er hat eine maximal erreichbare holographische Beugungseffizienz von 2,2 % bei einer Schreibintensität von 100 mW/cm² und einer Schreibwellenlänge von 568 nm und einem Winkel zwischen den Schreibstrahlen von 45° sowie einer Lesewellenlänge von 632,8 nm. Die Anstiegszeit der holographischen Beugungseffizienz betrug 100 ms. Die holographische Auflösung betrug wesentlich mehr als 2500 Linien/mm.

### Vergleichsbeispiel 1

Die kommerziell erhältliche Purpurmembran-Suspension des Typs BR 326 wird wie im Stand der Technik beschrieben zu einem Film verarbeitet, d.h. der pH Wert wird mittels eines Na/K Phosphatpuffers auf 6,5 eingestellt, es wird kein Glycerin zugesetzt und der Film auf einen Wassergehalt von 60 % getrocknet. Der erhaltene Film hat eine maximal erreichbare holographische Beugungseffizienz von 2 % bei einer Schreibintensität von 20 mW/cm² und einer Schreibwelienlänge von 568 nm und einem Winkel zwischen den Schreibstrahlen von 45° sowie einer Lesewellenlänge von 632,8 nm. Die Anstiegszeit der holographischen Beugungseffizienz beträgt 150 ms.

### Vergleichsbeispiel 2

Es wird wie in Vergleichsbeispiel 1 verfahren. Als Purpurmembran Suspension wird Wildtyp-Purpurmembran eingesetzt. Die Photozykluszeit beträgt 10 ms. Der erhaltene Film hat eine maximal erreichbare holographische Beugungseffizienz von 1 % bei einer Schreibintensität von 20 mW/cm² und einer Schreibweilenlänge von 568 nm und einem Winkel zwischen den Schreibstrahlen von 45° sowie einer Lesewellenlänge von 632,8 nm. Die Anstiegszeit der holographischen Beugungseffizienz beträgt 120 ms.

## Patentansprüche

1. Purpurmembran-Zubereitung mit einem pH Wert zwischen 6 und 11, die
a) eine Purpurmembran mit einer Photozykluszeit von mindestens 10 ms enthält, dadurch gekennzeichnet, daß sie
b) 1 bis 10 % eines Protonendonators/-akzeptors und
c) 1 - 30 % Wasser enthält.

2. Purpurmembran-Zubereitung nach Anspruch 1, dadurch gekennzeichnet, daß die in a) verwendete Purpurmembran eine Bacteriorhodopsinvariante enthält, bei der die Aminosäure Asparaginsäure an Position 96 durch eine beliebige andere natürliche Aminosäure ersetzt ist, oder bei der die Lage der Asparginsäure an Position 96 in ihrer Lage zur Schiff'schen Base verändert ist.

3. Purpurmembran-Zubereitung nach Anspruch 1, dadurch gekennzeichnet, daß die in a) verwendete Purpurmembran die Bacteriorhodopsinvariante BR 326 enthält.

4. Purpurmembran-Zubereitung nach Anspruch 1, dadurch gekennzeichnet, daß die in a) verwendete Purpurmembran eine Photozykluszeit von mehr als 50 ms hat.

5. Purpurmembran-Zubereitung nach Anspruch 1, dadurch gekennzeichnet, daß die in a) verwendete Purpurmembran eine Photozykluszeit von mehr als 100 ms hat.

6. Purpurmembran-Zubereitung nach einem oder mehreren der Ansprüche 2 bis 5, dadurch gekennzeichnet, daß als Protonendonator/akzeptor eine oder mehrere Substanzen ausgewählt aus der Gruppe Glycerin, Guanidin, Arginin, Harnstoff, Diethylamin, Natriumazid, Glykole, Mono-, Di-Polysaccharide, mono- oder polyfunktionelle Alkohole verwendet werden.

7. Purpurmembran-Zubereitung nach einem oder mehreren der Ansprüche 2 bis 6, dadurch gekennzeichnet, daß als Protonendonator/akzeptor Glycerin verwendet wird.

8. Verfahren zur Herstellung von Purpurmembran-Zubereitungen nach Anspruch 1, mit den Schritten, daß eine Purpurmembran-Suspension mit einer Photozykluszeit von mindestens 10 ms auf einen pH Wert zwischen 6 und 11 eingestellt wird, dieser Purpurmembran-Suspension 1 bis 10 % eines Protonendonators/akzeptors zugesetzt wird, und der so erhaltenen Suspension das Wasser bis auf einen Restgehalt von 1 bis 30% entzogen wird.

9. Verfahren zur Herstellung von Purpurmembran-Zubereitungen nach Anspruch 8, dadurch gekennzeichnet, daß die Purpurmembran-Suspension vor, während oder nach Durchführung der in Anspruch 8 genannten Verfahrenschritte jeweils entsprechend dem gewünschten Anwendungszweck wie aus dem Stand der Technik bekannt verarbeitet wird.

10. Speichermaterial für optische Informationen, dadurch gekennzeichnet, daß es eine Purpurmembran-Zubereitung nach einem der Ansprüche 1 - 7 enthält.

11. Speichermaterial für die holographische Mustererkennung, dadurch gekennzeichnet, daß es eine Purpurmembran-Zubereitung nach einem der Ansprüche 1 - 7 enthält.

12. Speichermaterial für die holographische Interferometrie, dadurch gekennzeichnet, daß es eine Purpurmembran-Zubereitung nach einem der Ansprüche 1 - 7 enthält.

13. Speichermaterial für holographisch-assoziative Speicher, dadurch gekennzeichnet, daß es eine Purpurmembran-Zubereitung nach einem der Ansprüche 1 - 7 enthält.

14. Speichermaterial für neuronale Netzwerke, dadurch gekennzeichnet, daß es eine Purpurmembran-Zubereitung nach einem der Ansprüche 1 - 7 enthält.

15. Speichermaterial für die optische Phasenkonjugation, dadurch gekennzeichnet, daß es eine Purpurmembran-Zubereitung nach einem der Ansprüche 1 - 7 enthält.

16. Speichermaterial für nichtlineare optische Filterung, dadurch gekennzeichnet, daß es eine Purpurmembran-Zubereitung nach einem der Ansprüche 1 - 7 enthält.

## Claims

1. Purple membrane preparation which has a pH of between 6 and 11 and contains
a) a purple membrane having a photocycle time of at least 10 ms, characterized in that it contains
b) from 1 to 10% of a proton donor/acceptor and
c) 1 - 30% of water.

2. Purple membrane preparation according to Claim 1, characterized in that the purple membrane used in a) contains a bacteriorhodopsin variant in which the amino acid aspartic acid in position 96 has been replaced by any other natural amino acid, or in which the position of the aspartic acid in position 96 in its position [sic] relative to the Schiff base has been changed.

3. Purple membrane preparation according to Claim 1, characterized in that the purple membrane used in a) contains the bacteriorhodopsin variant BR 326.

4. Purple membrane preparation according to Claim 1, characterized in that the purple membrane used in a) has a photocycle time of greater than 50 ms.

5. Purple membrane preparation according to Claim 1, characterized in that the purple membrane used in a) has a photocycle time of greater than 100 ms.

6. Purple membrane preparation according to one or more of Claims 2 to 5, characterized in that the proton donor/ acceptor used is one or more substances selected from the group consisting of glycerol, guanidine, arginine, urea, diethylamine, sodium azide, glycols, monosaccharides, disaccharides, polysaccharides, and monofunctional or polyfunctional alcohols.

7. Purple membrane preparation according to one or more of Claims 2 to 6, characterized in that the proton donor/ acceptor used is glycerol.

8. Process for the preparation of purple membrane preparations according to Claim 1, with the steps that a purple membrane suspension having a photocycle time of at least 10 ms is adjusted to a pH of between 6 and 11, from 1 to 10% of a proton donor/acceptor is added to this purple membrane suspension, and the water is removed from the resultant suspension to a residual content of from 1 to 30%.

9. Process for the preparation of purple membrane preparations according to Claim 8, characterized in that the purple membrane suspension is processed before, during or after the process steps mentioned in claim 8, in each case corresponding to the desired application, as known from the prior art.

10. Storage material for optical information, characterized in that it contains a purple membrane preparation according to one of Claims 1 - 7.

11. Storage material for holographic pattern recognition, characterized in that it contains a purple membrane preparation according to one of Claims 1 - 7.

12. Storage material for holographic interferometry, characterized in that it contains a purple membrane preparation according to one of Claims 1 - 7.

13. Storage material for holographic associative memories, characterized in that it contains a purple membrane preparation according to one of Claims 1 - 7.

14. Storage material for neuronal networks, characterized in that it contains a purple membrane preparation according to one of Claims 1 - 7.

15. Storage material for optical phase conjugation, characterized in that it contains a purple membrane preparation according to one of Claims 1 - 7.

16. Storage material for nonlinear optical filtering, characterized in that it contains a purple membrane preparation according to one of Claims 1 - 7.

## Revendications

1. Préparation de membrane pourpre avec un pH entre 6 et 11, qui
a) comporte une membrane pourpre ayant un temps de photocycle d'au moins 10 ms, caractérisée en ce qu'elle comporte
b) de 1 à 10 % d'un donneur/accepteur de protons, et
c) de 1 à 30 % _{d}'eau.

2. Préparation de membrane pourpre selon la revendication 1, caractérisée en ce la membrane pourpre utilisée en a) comporte une variante de la bactériorhodopsine où l'amino-acide acide asparaginique est substitué en position 96 par un autre aminoacide naturel quelconque, ou dans laquelle la situation de l'acide asparaginique en position 96 est changée en sa position pour une base de Schiff.

3. Préparation de membrane pourpre selon la revendication 1, caractérisée en ce que la membrane pourpre utilisée en a) comporte la variante BR 326 de la bactériorhodopsine.

4. Préparation de membrane pourpre selon la revendication 1, caractérisée en ce que la membrane pourpre utilisée en a) a un temps de photocycle supérieur à 50 ms.

5. Préparation de membrane pourpre selon la revendication 1, caractérisée en ce que la membrane pourpre utilisée en a) a un temps de photocycle supérieur à 100 ms.

6. Préparation de membrane pourpre selon une ou plusieurs des revendications 2 à 5, caractérisée en ce que comme donneur/accepteur de protons on utilise une ou plusieurs substances choisies dans le groupe de la glycérine, de la guanidine, de l'arginine, de l'urée, de la diéthylamine, de l'azide de sodium, des glycols, des mono, di et polysaccharides, des alcools mono ou polyfonctionnels.

7. Préparation de membrane pourpre selon une ou plusieurs des revendications 2 à 6, caractérisée en ce que l'on utilise la glycérine comme donneur/accepteur de protons .

8. Procédé pour fabriquer des préparations de membranes pourpres selon la revendication 1, avec les étapes suivantes :
on ajuste à une valeur de pH entre 6 et 11 une suspension de membrane pourpre ayant un temps de photocycle d'au moins 10 ms, on ajoute à cette suspension de membrane pourpre de 1 à 10 % d'un donneur/accepteur de protons, et on enlève l'eau de la suspension ainsi obtenue, jusqu'à une teneur en résidu de 1 à 30 %.

9. Procédé pour fabriquer des préparations de membranes pourpres selon la revendication 8, caractérisé en ce que l'on transforme la suspension de membrane pourpre avant, pendant ou après la réalisation de l'étape de procédé indiquée dans la revendication 8, chaque fois en fonction du but d'utilisation souhaité, conformément à l'état de la technique.

10. Matière à mémoire pour des informations optiques, caractérisée en ce qu'elle comporte une préparation de membrane pourpre selon une des revendications 1 à 7.

11. Matière à mémoire pour la reconnaissance holographique d'échantillons caractérisée en ce qu'elle est une préparation de membrane pourpre selon une des revendications 1 à 7.

12. Matière à mémoire pour l'interférométrie holographique, caractérisée en ce qu'elle est une préparation de membrane pourpre selon une des revendications 1 à 7.

13. Matière à mémoire pour une mémoire associative holographique, caractérisée en ce qu'elle est une préparation de membrane pourpre selon une des revendications 1 à 7.

14. Matière à mémoire pour des réseaux neuronaux, caractérisée en ce qu'elle est une préparation de membrane pourpre selon une des revendications 1 à 7.

15. Matière à mémoire pour la conjugaison optique de phases, caractérisée en ce qu'elle est une préparation de membrane pourpre selon une des revendications 1 à 7.

16. Matière à mémoire pour le filtrage optique non linéaire, caractérisée en ce qu'elle est une préparation de membrane pourpre selon une des revendications 1 à 7.
